# FASCICULE DE BREVET EUROPEEN

(11) **EP 0 464 768 B1**
(45) Date de publication et mention de la délivrance du brevet: **30.08.1995**
(21) Numéro de dépôt: 91110942.9
(22) Date de dépôt: 02.07.1991
(51) Int. Cl.: H04L 13/08, G06F 9/42

(54) **Module interface de transfert de données**
Schnittstellenmodul für Datenübertragung
Interface module for data transfer

(30) Priorité: 02.07.1990 FR 9008338
(43) Date de publication de la demande: 08.01.1992
(73) Titulaire: ALCATEL MOBILE COMMUNICATION FRANCE, 75008 Paris (FR)
(72) Inventeur: Château, Alain, F-95220 Herblay (FR); Rousseau, Emmanuel, F-75008 Paris (FR)
(74) Mandataire: Weinmiller, Jürgen

(56) Documents cités:
- EP-A- 0 205 112
- EP-A- 0 323 310
- WO-A-82/01429

## Description

### Module interface de transfert de données.

L'invention concerne un module interface de transfert de données assurant un transfert de données d'un premier circuit vers un second circuit. Le module interface comporte des moyens nécessaires à l'acquisition et la mémorisation des données issues du premier circuit, à la lecture et l'émission de ces données vers le second circuit, à la commande et au contrôle du transfert de ces données.

Plusieurs types de module interface réalisant une liaison entre un premier circuit et un second circuit sont connus. Lesdits modules comportent une zone de stockage de données constituée par des registres ou une mémoire dont les différentes adresses sont issues du premier circuit pendant une phase d'acquisition de ces données et du second circuit pendant une phase d'émission de ces données. Un multiplexeur d'adresses permet cet adressage alterné depuis le premier ou le second circuit. Ledit module présente cependant l'inconvénient de nécessiter un nombre de connexions d'entrée et de sortie au moins égal à l'ensemble des signaux d'adresses issues des premier et second circuits.

Il est connu aussi de s'affranchir de la fourniture des signaux d'adresses depuis le premier circuit et le second circuit par l'utilisation de la zone de stockage selon une structure FIFO (premier entré, premier sorti), avec en ce cas l'inconvénient d'une gestion plus complexe de cette zone de stockage.

Il est également connu, notamment par la demande de brevet WO-A-82 01429 d'utiliser une zone de stockage selon une structure LIFO (dernier entré, premier sorti). Cependant, il n'est pas prévu de moyens de contrôle pour vérifier que le nombre de données lues dans cette zone de stockage correspond au nombre de données qui y ont été préalablement enregistrées.

La présente invention telle que caractérisée dans les revendications résoud le problème de la création d'un module interface de transfert de données sans la nécessité d'une gestion complexe de la zone de stockage, sans la nécessité de recevoir des signaux d'adresses des premier et second circuits et qui permet de plus de contrôler le bon déroulement du transfert des données.

La présente invention a pour objet un module interface de transfert de données comportant, des moyens pour l'acquisition des données, des moyens pour l'enregistrement des données acquises dans une zone de stockage comprenant des emplacements identifiés chacun par une adresse fournie par un générateur d'adresses, des moyens pour la lecture de ces données dans les emplacements de ladite zone de stockage, des moyens pour l'émission de ces données, des moyens de commande permettant, dans des phases d'acquisition et d'émission successives, l'acquisition et l'enregistrement de données dans un nombre déterminé d'emplacement, puis la lecture et l'émission de ces données, ledit générateur d'adresses élaborant une suite incrémentale d'adresses, depuis une adresse de début jusqu'à une adresse de fin, utilisée pendant ladite phase d'acquisition et puis élaborant une suite décrémentale d'adresses, depuis ladite adresse de fin jusqu'à ladite adresse de début, utilisée pendant ladite phase d'émission, caractérisé en ce qu'il comporte également des moyens de contrôle qui vérifient que ledit générateur d'adresses, est revenu à ladite adresse de début après la succession d'une dite phase d'acquisition et d'une dite phase d'émission et élaborent alors un mot d'état.

Cette génération autonome des adresses permet la réduction des échanges et la simplification de la gestion de la zone de stockage du fait que ce générateur d'adresses procède par incrémentation et décrémentation successives depuis cette position d'origine. La surface physique nécessaire à l'implantation des différents composants dudit module est alors réduite et le coût de fabrication global du module interface abaissé.

Le contrôle se limitant à la surveillance de la position d'origine du générateur d'adresses, la logique qui le réalise est alors simple de même que la prise en charge de ce contrôle qui consiste en la seule lecture dudit mot d'état.

L'invention sera mieux comprise avec la description ci-dessous et les figures qui l'accompagnent.

La figure 1 donne le schéma synoptique général d'un module interface de transfert de données.

La figure 2 présente un exemple de réalisation d'un tel module.

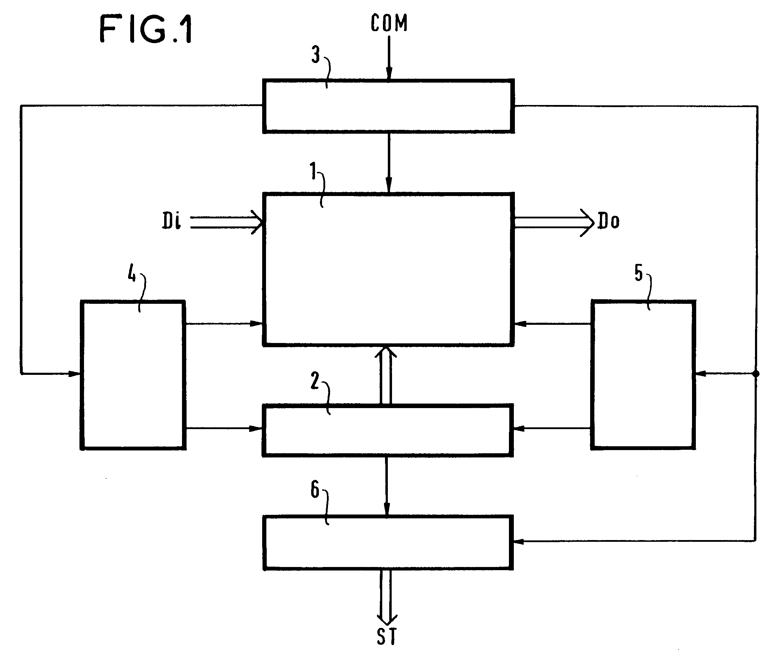

Un schéma synoptique général d'un module interface de transfert de données selon l'invention est présenté figure 1. Une zone de stockage 1 constituée de différents emplacements repérés par une adresse fournie par un générateur d'adresses 2 acquièrt, par bloc de taille qui peut être variable, un ensemble de données qui sont alors successivement mémorisées dans lesdits emplacements. Des moyens de commande 3 reçoivent un signal de commande COM pour permettre l'écriture ou la lecture dans la zone de stockage 1. Ils autorisent également la génération d'adresses et le chargement par l'intermédiaire de moyens d'acquisition et d'enregistrement 4. Ces mêmes moyens de commande 3 associés à des moyens de lecture et d'émission 5 valident ensuite l'émission desdites données qui sont alors extraites une à une desdits emplacements, la première donnée émise étant la dernière mémorisée. Des moyens de contrôle 6 élaborés depuis le générateur d'adresses 2 permettent de vérifier que le nombre de données émises Do est égal au nombre de données acquises Di et de fournir un mot d'état ST dont la lecture renseigne alors sur le bon déroulement de l'émission.

L'ensemble est organisé selon trois phases : une phase d'initialisation durant laquelle le générateur d'adresses 2, les moyens de commande 3, les moyens d'acquisition et d'enregistrement 4, les moyens de lecture et d'émission 5 et les moyens de contrôle 6 sont initialisés et la zone de stockage 1 désactivée, une phase d'acquisition pendant laquelle les données sont acquises et mémorisées dans ladite zone de stockage 1, une phase d'émission au cours de laquelle ces mêmes données sont extraites de ladite zone de stockage 1 et émises.

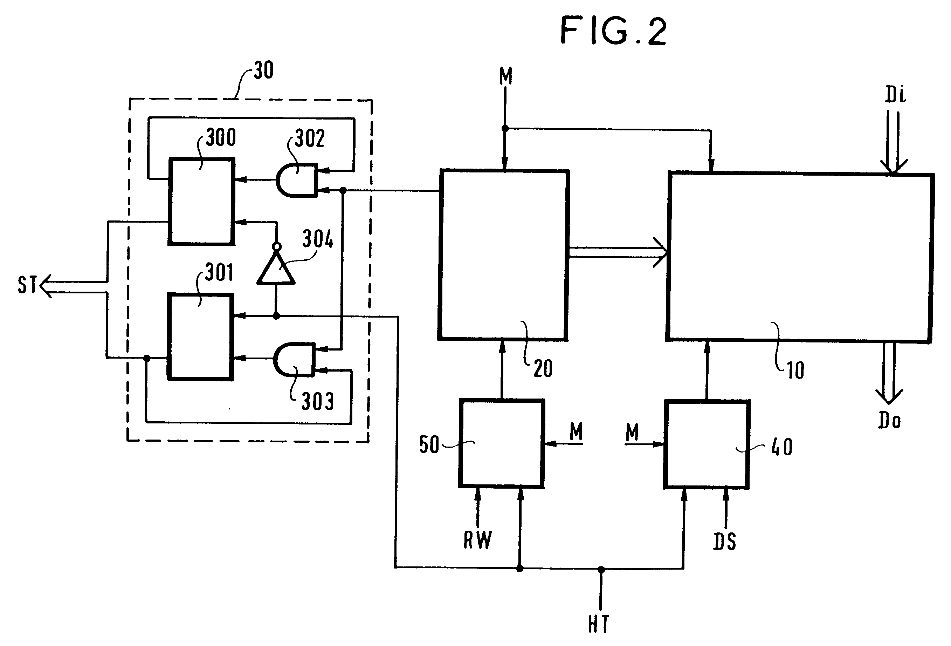

Dans un mode de réalisation représenté figure 2 un module interface de transfert de données comporte principalement une mémoire de type RAM 10 associée à un compteur-décompteur 20, une logique de détection d'erreurs 30 assurant le contrôle de l'ensemble.

La mémoire 10 est configurée en écriture, pendant ladite phase d'acquisition, ou en lecture, pendant ladite phase d'émission, selon le niveau de son entrée écriture-lecture déterminé par la valeur d'un signal de mode M, issu du signal de commande COM.

L'écriture des données auxdits emplacements s'effectue séquentiellement par sélections successives de la mémoire 10 via un premier signal de synchronisation DS de type chip-select ou data-strobe issu du signal de commande COM. Les données sont mémorisées par adresses croissantes de 1 à A où A est le nombre total de données écrites. La lecture des données se déroule symétriquement, les données étant lues aux adresses décroissantes de A à 1 par sélections successives de la mémoire 10 via une horloge de transfert HT, issu du signal de commande COM. En l'absence de ce signal d'horloge, le module est dans une phase d'attente prête à émettre les données qu'il a préalablement mémorisé.

Cette sélection, en écriture ou en lecture, est effectuée par la modification du niveau de l'entrée de sélection de la mémoire 10 qui reçoit le signal de mode M. Par ailleurs, un premier circuit multiplexeur 40 qui reçoit à la fois ledit premier signal de synchronisation DS et ladite horloge de transfert HT, sélectionne l'un ou l'autre de ces signaux selon le niveau du signal de mode M.

Le compteur décompteur 20 est sélectionné en comptage, pendant ladite phase d'acquisition, ou en décomptage, pendant ladite phase d'émission, selon le niveau de son entrée comptage-décomptage déterminé par ledit signal de mode M.

En comptage ledit compteur-décompteur 20 délivre ladite suite croissante d'adresses de 1 à A au rythme d'un second signal de synchronisation RW de type écriture-lecture, issu du signal de commande COM. En fin de comptage la valeur du compteur est égale au nombre de données acquises Di. En décomptage ledit compteur-décompteur 20 délivre ladite succession décroissante d'adresses de A à 1 selon le cadencement de ladite horloge de transfert HT. Le comptage ou le décomptage est effectué par la modification du niveau de l'entrée d'horloge du compteur-décompteur 20 au travers d'un second circuit multiplexeur 50 qui reçoit à la fois ladite horloge de transfert HT et ledit second signal de synchronisation RW la sélection de l'un ou l'autre signal étant effectuée par ledit signal de mode M.

En fin de décomptage le compteur doit être à 0 et son signal de retenue à 1. La connaissance du nombre de données à transmettre n'est pas nécessaire au fonctionnement du compteur-décompteur 20 comme de la mémoire 10, celui-ci étant de fait, présent dans le compteur en fin de chargement.

Il suffit seulement de prévoir une mémoire qui possède un nombre d'emplacements supérieur au nombre maximum de données à acquérir A et de noter que ces données doivent parvenir dans l'ordre inverse de leur émission ultérieure. Le cadencement de ladite horloge de transfert HT peut être variable, le passage d'une phase à l'autre ne se produisant, sur l'ordre dudit signal de mode M, qu'après l'achèvement de chacune d'entre elles.

La logique de détection d'erreurs 30 vérifie que le nombre de données émises, Do, sur le cadencement de ladite horloge de transfert HT est égal au nombre de données acquises, Di, et mémorisées auxdits emplacements de la mémoire 10. Après un cycle complet acquisition-émission, ledit signal de retenue du compteur-décompteur doit être à 1 si le nombre de données émises, Do, est correct, celui-ci ayant été initialisé à 0 pendant ladite phase d'initialisation. Plutôt que de tester directement ledit signal de retenue, il est préférable de détecter les occurrences de ses différents fronts, les diverses combinaisons ainsi obtenues permettant une meilleure estimation du bon déroulement de l'émission de données. Ledit mot d'état, ST, qui est alors délivré est particulièrement significatif. La détection des fronts montants et descendants dudit signal de retenue est réalisé par deux bascules D 300 et 301 initialisées à 0 et chargées à 1 respectivement après le front montant et le front descendant. La sortie non inversée de chaque bascule est rebouclée sur leur entrée respective par l'intermédiaire d'un circuit ET, 302 et 303, assurant ainsi une mémorisation de ces sorties. Les entrées d'horloge de chaque bascule proviennent pour l'une de ladite horloge de transfert HT et pour l'autre de son inverse au travers d'un circuit NON, 304. Les différentes combinaisons des états de sortie desdites bascules 300 et 301 détermine ledit mot d'état, ST, et permettent une évaluation de l'émission des données. En effet la détection d'aucun desdits fronts indique une lecture insuffisante de données, la détection successive d'un front montant et d'un front descendant, une lecture d'un nombre trop élevé de données, seule la détection d'un unique front montant révèle une lecture correcte de l'ensemble de données acquises puis mémorisées.

L'invention ne se limite pas au mode particulier de réalisation décrit précedemment, il est en effet à la portée de l'homme de l'art d'en élaborer d'autres comme il lui est aisé de réaliser l'initialisation des différents éléments précités.

## Revendications

1. Module interface de transfert de données comportant : des moyens pour l'acquisition de données (4), des moyens pour l'enregistrement des données acquises (4) dans une zone de stockage (1) comprenant des emplacements identifiés par une adresse fournie par un générateur d'adresses (2), des moyens pour la lecture de ces données (5) dans les emplacements de ladite zone de stockage (1), des moyens pour l'émission de ces données (5), des moyens de commande (3) permettant, dans des phases d'acquisition et d'émission successives, l'acquisition et l'enregistrement de données dans un nombre déterminé d'emplacement, puis la lecture et l'émission de ces données, ledit générateur d'adresses (2) élaborant une suite incrémentale d'adresses, depuis une adresse de début jusqu'à une adresse de fin, utilisée pendant ladite phase d'acquisition et puis élaborant une suite décrémentale d'adresses, depuis ladite adresse de fin jusqu'à ladite adresse de début, utilisée pendant ladite phase d'émission, caractérisé en ce qu'il comporte également des moyens de contrôle (6) qui vérifient que ledit générateur d'adresses (2) est revenu à ladite adresse de début après la succession d'une dite phase d'acquisition et d'une dite phase d'émission et qui élaborent alors un mot d'état.

2. Module interface de transfert de données selon la revendication 1 caractérisé en ce que ledit générateur d'adresses (2) est constitué d'un compteur-décompteur (20) qui pendant ladite phase d'acquisition, pour permettre son incrémentation et ensuite pendant ladite phase d'émission, pour permettre sa décrémentation, reçoit un nombre d'impulsion d'horloge égal au nombre de données à tranférer.

3. Module interface de transfert de données selon l'une quelconque des revendications 1 ou 2 caractérisé en ce que lesdits moyens de contrôle (6) comportent une logique de détection d'erreurs (30) constituée de deux bascules D (300) et (301) commandés par les impulsions d'horloge émises pendant ladite phase d'émission et dont chaque sortie non inversée, rebouclée sur son entrée qui reçoit en outre le signal de retenue du compteur-décompteur (20), délivre un bit dudit mot d'état.

## Patentansprüche

1. Schnittstellenmodul zur Datenübertragung mit Mitteln (4) zum Erfassen von Daten und zum Einschreiben von erfaßten Daten in eine Speicherzone (1), deren Speicherplätze durch eine von einem Adressengenerator (2) gelieferte Adresse identifiziert werden, mit Mitteln (5) zum Auslesen dieser Daten (5) aus den Speicherplätzen der Speicherzone (1) und zum Ausgeben dieser Daten, mit Steuermitteln (3), die in den aufeinanderfolgenden Erfassungs- und Ausgabephasen die Erfassung und Einschreibung der Daten in eine bestimmte Anzahl von Speicherplätzen und anschließend das Auslesen und Ausgeben dieser Daten ermöglichen, wobei der Adressengenerator (2) eine inkrementale Adressenfolge ab einer Anfangsadresse bis zu einer während der Erfassungsphase benutzten Endadresse erzeugt, und dann eine dekrementale Adressenfolge ab der Endadresse bis zu der während der Ausgabephase benutzten Anfangsadresse erzeugt, dadurch gekennzeichnet, daß der Modul weiter Kontrollmittel (6) aufweist, die nachprüfen, ob der Adressengenerator (2) nach der Abfolge einer Erfassungsphase und einer Ausgabephase zur Anfangsadresse zurückgekehrt ist, und dann ein Zustandswort erzeugen.

2. Schnittstellenmodul zur Datenübertragung nach Anspruch 1, dadurch gekennzeichnet, daß der Adressengenerator (2) aus einem Aufwärts-Abwärtszähler (20) besteht, der während der Erfassungsphase und anschließend während der Ausgabephase eine Anzahl von Zähltaktimpulsen empfängt, die der Anzahl der zu übertragenden Daten entspricht.

3. Schnittstellenmodul zur Datenübertragung nach einem beliebigen der Ansprüche 1 oder 2, dadurch gekennzeichnet, daß die Kontrollmittel (6) eine Fehlererfassungslogik (30) aufweisen, die aus zwei D-Kippstufen (300) und (301) bestehen, die während der Ausgabephase von den Zähltaktimpulsen gesteuert werden, und von denen jeder nicht-invertierte Ausgang ein Bit des Zustandswortes liefert und an seinen Eingang rückgekoppelt ist, welcher außerdem das Übertragssignal des Aufwärts-Abwärtszählers (20) empfängt.

## Claims

1. A data transfer interface module comprising: data acquisition means (4), means (4) for storing the acquired data in a storage zone (1) comprising locations identified by respective addresses delivered by an address generator (2), means (5) for reading said data from the locations in said storage zone (1), means (5) for transmitting said data, control means (3) suitable, during successive acquisition and transmission phases for acquiring and storing data in a determined number of locations, then for reading and transmitting said data, said address generator (2) generating an incrementing sequence of addresses from a starting address to an end address for use during said acquisition stage, and then generating a decrementing sequence of addresses from said end address to said starting address for use during said transmission stage, the module being characterized in that it also includes monitor means (6) for verifying that said address generator (2) returns to said starting address after one of said acquisition stages and one of said transmission stages have succeeded each other, and which then generates a status word.

2. A data transfer interface module according to claim 1, characterized in that said address generator (2) is constituted by an up/down counter (20) which receives the same number of clock pulses during said acquisition stage for incrementation purposes and then during said transmission stage for decrementation purposes as the number of data items to be transferred.

3. A data transfer module according to claims 1 or 2, characterized in that said monitor means (6) comprise an error detection logic circuit (30) constituted by two D-type bistables (300, 301) controlled by the clock pulses issued during said transmission stage, with the non-inverting output of each bistable being looped back to its input which also receives the carry signal of the up/down counter (20) to deliver one bit of said status word.
